Europäisches Patentamt

European Patent Office

Office européen des brevets

(19)

(11) Veröffentlichungsnummer: **0 262 300 B1**

(12) **EUROPÄISCHE PATENTSCHRIFT**

(45) Veröffentlichungstag der Patentschrift: **28.08.91**

(51) Int. Cl.⁵: **A23G 1/04**

(21) Anmeldenummer: **87107723.6**

(22) Anmeldetag: **27.05.87**

(54) Verfahren und Vorrichtung zur Herstellung einer Schokolademasse.

(30) Priorität: **29.08.86 DE 3629526**

(43) Veröffentlichungstag der Anmeldung:
**06.04.88 Patentblatt 88/14**

(45) Bekanntmachung des Hinweises auf die
Patenterteilung:
**28.08.91 Patentblatt 91/35**

(84) Benannte Vertragsstaaten:
**CH DE ES FR GB LI NL**

(56) Entgegenhaltungen:
**EP-A- 0 032 217      EP-A- 0 111 614**
**EP-A- 0 140 729      WO-A-85/05012**
**BE-A- 540 945        DE-A- 2 461 543**
**DE-A- 3 406 370      DE-C- 927 006**
**FR-A- 1 567 475      FR-A- 2 222 020**
**GB-A- 1 436 358      GB-A- 2 023 991**
**US-A- 3 904 777**

**Carbohydrate Research, vol. 135(1985),
pp.C5-C9**

(73) Patentinhaber: **Werner & Pfleiderer GmbH**
**Theodorstrasse 10 Postfach 30 12 20**
**W-7000 Stuttgart 30(DE)**

(72) Erfinder: **Wiedmann, Werner, Dr.-Ing.**
**Lengefeldweg 23**
**W-7000 Stuttgart 31(DE)**

(74) Vertreter: **Schneck, Herbert, Dipl.-Phys., Dr. et
al**
**Rau & Schneck Patentanwälte Königstrasse
2**
**W-8500 Nürnberg 1(DE)**

## Beschreibung

Die Erfindung richtet sich auf ein Verfahren und eine Vorrichtung zur Herstellung einer Schokolademasse nach dem Oberbegriff von Anspruch 1.

Ein gattungsgemäßes Verfahren bzw. eine solche Vorrichtung unter Verwendung zweiwelliger, ineinandergreifender, dicht kämmender Schneckenextruder sind aus der DE-OS 16 o7 821 bekannt.

Es ist weiterhin aus der DE-PS 927 oo6 bekannt, in einem kontinuierlichen Prozeß zunächst eine Vakuumentfeuchtungszone zur Entfernung aromaschädlicher Nebenbestandteile und anschließend eine Veredelungszone vorzusehen.

Die EP-OS 14o 729 beschreibt ein Verfahren unter Verwendung eines Schneckenextruders, bei welchem unerwünschte Geschmacksstoffe (Off-Flavours) aus der fertigen Mischung abgezogen werden, wobei dort keine hohen Temperaturen und Feuchtigkeitsgrade anwendbar sind, und an sich gewünschte Röstaromen mitentfernt werden.

In der DE-OS 34 17 126 wird ein Verfahren beschrieben, bei welchem die Masse beim Belüften flüssig wird und über eine Stopfschnecke in einen Extruder gedrückt wird. Hierdurch wird keine hohe Dosiergenauigkeit erzielt und die warme Masse kann nicht geschert werden ohne zu karamelisieren.

Die Anmelderin hat ausgehend von diesem bekannten Stand der Technik ein kontinuierliches Verfahren zur Schokoladenherstellung entwickelt, in welchem bereits alle diskontinuierlichen Schritte ausgeschaltet wurden. Allerdings wurde die Kontinuität dieses Verfahrens im wesentlichen dadurch erreicht, daß eine Mehrzahl von herkömmlichen Einzel-Aggregaten über Verbindungsleitungen hintereinandergeschaltet wurden, so daß die anzustrebende vorrichtungsmäßige Vereinfachung sowie der entsprechende kompakte Aufbau und eine damit einhergehende, möglichst kurze Verweilzeit noch nicht optimal realisiert werden konnten.

Der Erfindung liegt die Aufgabe zugrunde, ein Verfahren und eine Vorrichtung zur Herstellung einer Schokolademasse zu schaffen, wobei in einem kontinuierlichen Verfahren unter Eliminierung von Chargen-Mischern und Conchen ein möglichst kompakter, kostengünstiger Aufbau der Vorrichtung und eine kurze Verweildauer bei sehr guter Aromaqualität des Fertigprodukts erreicht werden.

Diese Aufgabe wird gelöst bei einem Verfahren gemäß dem kennzeichnenden Teil von Anspruch 1. Durch die Beaufschlagung der Rohmasse mit Hochdruck-Dampf im Anschluß an eine Dampfsperre unmittelbar im Anschluß an den Eintrag in den Extruder wird überraschenderweise nicht nur die an sich unter dem Einfluß von Hochdruck-Dampf und Scherwirkung bekannte Entkeimung erreicht, sondern darüber hinaus werden bereits ganz am Anfang des Herstellungsprozesses Off-Flavours abgezogen, d.h. bereits vor Bildung der gewünschten Röstaromen, so daß am Ende des Prozesses kein Conchieren mehr erforderlich ist. Darüber hinaus wird der Extruder gleichzeitig als Zuführpumpe für eine Hammermühle verwendet, wobei das dort ausgetragene Produkt wieder unmittelbar in ein und denselben Extruder zurückgeführt wird, so daß lediglich ein gemeinsamer Antrieb erforderlich ist und kurze Wege und damit kurze Verweildauern realisierbar sind.

Durch die gemäß Anspruch 2 vorgesehene Teilfüllung und Heizung der Gehäusewandung in der dritten Zone wird eine vollständige Röstung in dünnen Schichten im Zusammenwirken mit dem gleichsinnigen, selbstreinigenden Zweiwellen-Extruder erreicht. Die Röstgase können durch die Teilfüllung rückwärts entgegen der Förderrichtung des Produkts abgezogen werden. Aufgrund der in der ersten Stufe erzielten vollständigen Entgasung ist eine Vorentgasung in der Röststufe entbehrlich, so daß sehr kurze Röstzeiten erzielbar sind.

Vorteilhafterweise wird gemäß Anspruch 3 für die ersten drei Zonen lediglich eine einzige Vakuumpumpe verwendet.

Die Ausgestaltung nach Anspruch 4 ermöglicht eine Abkühlung der Masse im selben Extruder. Auf die herkömmliche Röster-Kühlstufe kann verzichtet werden, und das Produkt kann im Extruder verbleiben.

Bei der Verwendung von Kristallzucker verläßt die Mischung den Extruder, um gemäß Anspruch 5 nach Passieren einer Walze und gegebenenfalls eines Stoffaustausch-Fluidatbetts wieder in diesen zurückzukehren. Auch diese Abzweigung kann mit kurzen Wegen bewerkstelligt werden.

Die dann entstehende Masse wird gemäß Anspruch 6 einer fünften Gehäusezone des gleichen Extruders zur Einleitung von Scherkräften zugeführt. Dabei läßt man vorzugsweise - wenn ein Stoffaustausch-Fluidatbett verwendet wurde - das dabei entstehende lose Pulver in einen Extrudereinlauf rieseln. Die Verflüssigung erfolgt in einer sehr kurzen Scherzone, wobei die Scherintensität durch eine Aufteilung der Kakaobutter eingestellt werden kann, so daß Rohstoff- und Dosierschwankungen ausgeglichen werden können.

Gemäß Anspruch 7 werden in einer anschließenden sechsten Gehäusezone Lecithin und Restkakaobutter eingemischt.

Die Ansprüche 11 bis 17 beschreiben eine Vorrichtung zur Durchführung des Verfahrens nach Anspruch 1. Diese umfaßt vor allem einen zweiwelligen, ineinandergreifenden, dichtkämmenden Schnecken-Extruder mit gleichsinniger Drehrichtung, in welchem im Gegensatz zu bekannten Herstellungsverfahren nicht nur einige wenig Teilschritte hintereinander ablaufen, sondern welcher eine einzige, zentrale Vorrichtung für den gesamten Prozeß bildet, und welcher neben seinen bestimmungsgemäßen Wirkungen, wie Einleitung von Scherkräften, Mischen und Dosieren, gleichzeitig auch als Pumpe für die Produkt-Masse vom Einzugsbereich bis zum Austrag wirkt. Hierdurch können kurze Produktwege und geringe Verweilzeiten realisiert werden.

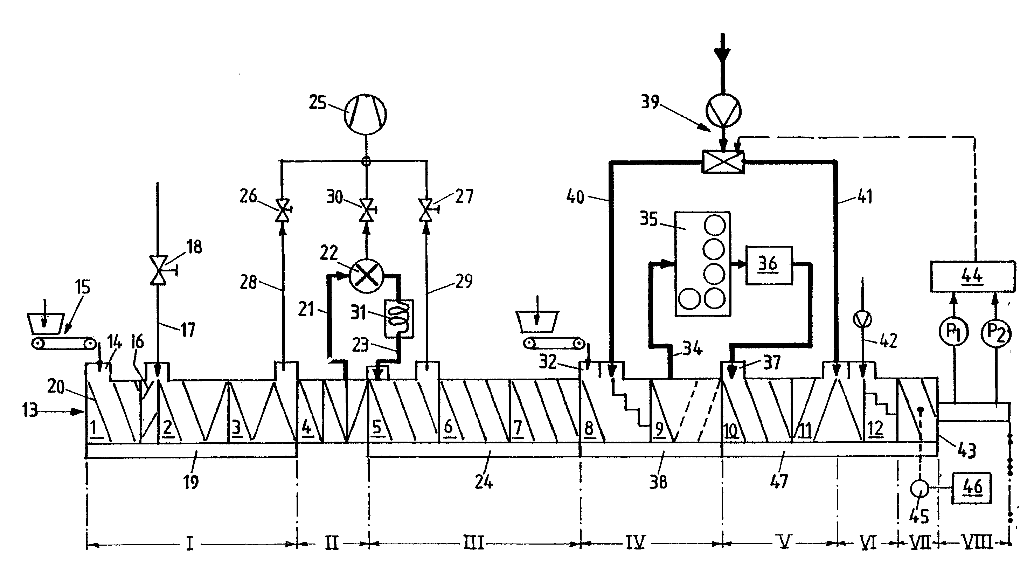

Weitere Merkmale, Vorteile und Einzelheiten der Erfindung ergeben sich aus der folgenden Beschreibung einer bevorzugten Ausführungsform anhand der Zeichnung. Diese zeigt eine erfindungsgemäße Vorrichtung in schematischer, blockschaltbildartiger Darstellung.

In der Zeichnung ist ein zwölf Gehäuseschüsse 1 bis 12, d.h. miteinander verbundene Gehäuseabschnitte, umfassender, zweiwelliger, gleichsinnig drehender Schnecken-Extruder 13 dargestellt.

Der erste Gehäuseschuß 1 weist eine Zuführöffnung 14 für rohen Kernbruch auf, welcher über eine Dosiereinrichtung 15 eingetragen wird.

Am Ende des ersten Gehäuseschusses 1 ist eine Dampfsperre 16 angeordnet, hinter welcher im Übergangsbereich zwischen dem ersten und zweiten Gehäuseschuß 1 bzw. 2 eine Zuführleitung 17 mit einer Dosiereinrichtung 18 für Hochdruckdampf mündet. Die Dampfsperre 16, welche als einen Masse-Stau bewirkendes Rückförderelement der Schnecken 2o ausgebildet ist, verhindert, daß der zugeführte Hochdruck-Dampf in den ersten Gehäuseschuß 1 gelangt. Der zweite Gehäuseschuß 2 und der sich daran anschließende dritte Gehäuseschuß 3 sind von einem Heizmantel 19 umgeben.

Die ersten drei Gehäuseschüsse 1 bis 3 bilden zusammen die Gehäusezone I aus.

In dieser Gehäusezone I wird der rohe Kernbruch über die Zuführleitung 17 mit 1o% Hochdruck-Dampf beaufschlagt. Überraschenderweise hat die dort erfolgende Dampfzuführung, Heizung (über den Heizmantel 19) und Scherung (durch Schnecken 2o des Extruders 13) nicht nur die an sich bekannte Entkeimungswirkung, sondern darüber hinaus werden bereits in dieser Phase Off-Flavours abgezogen. Das schwer dosierfähige, krümelige Material bleibt - was gegenüber vorbekannten Vorrichtungen besonders günstig ist - im Extruder, der in einem vierten Gehäuseschuß 4 entsprechend einer zweiten Gehäusezone II als Pumpe dient, um über eine Abzweigleitung 21 eine Hammermühle 22 zu beschicken. Von der Hammermühle 22 gelangt die Masse über eine Leitung 23 in den Anfangsbereich eines fünften Gehäuseschusses 5, der zusammen mit den beiden weiteren Gehäuseschüssen 6, 7 eine dritte Gehäusezone III ausbildet, welche über einen Heizmantel 24 beheizbar ist. Eine Vakuum-Pumpe 25 ist über Ventile 26 und 27 mit den Leitungen 28 bzw. 29 der Gehäuseschüsse 3 bzw. 5 und gegebenenfalls über ein Ventil 3o mit der Hammermühle 22 verbunden. Da in der Gehäusezone I und in der Gehäusezone III über die Leitungen 28 und 29 Vakuum angelegt wird, kann auf ein Vakuum in der Hammermühle 22 auch verzichtet werden, d.h. es kann jede handelsübliche Mühle verwendet werden. Die Feuchte im Extruder kann bis zu 1o% betragen. Bei Einsatz einer Vakuum-Mühle, welche über das Ventil 3o mit Vakuum beaufschlagt werden kann, ist die mögliche Feuchte höher, die Masse kühlt aber ab und muß über einen in der Leitung 23 angeordneten Rohrbündel-Wärmetauscher 31 wieder auf knapp unter Röst-Temperatur gebracht werden.

In der Gehäusezone III erfolgt die Röstung bis zu 1oo% in dünnen Schichten in dem teilgefüllten, selbstreinigenden Zweiwellen-Extruder 13. Die Röstgase können aufgrund der Teilfüllung rückwärts abgezogen werden.

Bei dem anschließenden On-line-Mischen kühlt die Masse ab, so daß auf eine herkömmliche Röster-Kühlstufe verzichtet werden kann.

In einen Gehäuseschuß 8 wird über eine Zugabeleitung 32 Zucker in Form von Puderzucker oder Kristallzucker zugegeben, welcher in den Gehäuseschuß 8 eingemischt wird.

Bei der Zugabe von Puderzucker verbleibt die Masse anschließend im Extruder 13. Bei der Verwendung von Kristallzucker verläßt die Mischung den Extruder 13 über eine Zweigleitung 34 und wird einer Walze 35 sowie einem Stoffaustausch-Fluidatbett 36 zugeführt, um anschließend über einen Dosiertrichter 37 als lose einrieselndes Pulver in den Gehäuseschuß 1o zu gelangen. Die Verwendung eines Stoffaustausch-Fluidatbetts 36 ist nicht zwingend erforderlich, da die Stofftransport-Vorgänge aufgrund der hohen Temperaturen und geringen Drücke in der ersten Hälfte des Extruders 13 gegenüber vorbekannten Verfahren wesentlich verstärkt werden.

Die vorstehend beschriebenen Gehäuseschüsse 8 und 9, welche zusammen die Gehäusezone IV ausbilden, sind zur Erzielung der gewünschten Kühlwirkung von einem Kühlmantel 38 umgeben.

Die Gehäuseschüsse 1o und 11 bilden eine Gehäusezone V, in welcher ein definiertes und geregeltes Verflüssigen durch Ausbildung einer sehr kurzen Scherzone bewerkstelligt wird. Die Scherintensität wird dadurch eingestellt, daß Kakaobutter über eine Dosier- und Verteileinrichtung 39 dem Extruder 13 so zugeführt wird, daß die auf die Leitungen 4o und 41 entfallenden Mengen vorgegeben werden können, so daß entweder eine größere Menge Kakaobutter über die Leitung 4o bereits in den Gehäuseschuß 8 oder über die Leitung 41 in den Gehäuseschuß 11 eingeführt wird. Über eine Leitung 42 kann in den Gehäuseschuß 11 überdies auch noch Lecithin eingegeben werden.

In einem Teil des Gehäuseschusses 11 und des Gehäuseschusses 12 wird eine Einmischung der über die Leitungen 41, 42 zugeführten Komponenten Kakaobutter und Lecithin bewerkstelligt, wobei der endseitige Abschnitt des Gehäuseschusses 12 als Austragspumpe dient. Dementsprechend werden durch diese Gehäuseschüsse im Anschluß an die der Scherung dienenden Gehäusezone V noch eine Gehäusezone VI für die Mischung und eine Gehäusezone VII als Pumpzone ausgebildet. Hieran schließt sich am austragsseitigen Ende 43 des Extruders eine Gehäusezone VIII an, in welcher mittels einer Viskositäts-Meßeinrichtung 44 über eine Druckdifferenz ($P_1$ - $P_2$) die Viskosität gemessen wird, wobei die Viskositäts-Meßeinrichtung 44 mit der Verteil- und Dosiereinrichtung 39 verbunden ist, um unabhängig von Rohstoff-und Dosierschwankungen eine gewünschte Ausgangs-Viskosität einzustellen.

Die fertige Schokoladenmasse wird anschließend in einen nicht dargestellten Vorratstank gepumpt, wobei die Pumpwirkung der Schnecken 2o des Extruders 13 herangezogen wird.

In dem Gehäuseschuß 12 ist eine Temperatur-Meßeinrichtung 45 mit nachgeordneter Temperatur-Regeleinrichtung 46 vorgesehen, über welche eine Temperierung der Gehäuseschüsse 1o bis 12 mittels eines Doppelmantels 47 auf eine Temperatur von z.B. 4o°C erfolgen kann.

Anhand der nachfolgend beschriebenen Ausführungsbeispiele wird die Durchführung des erfindungsgemäßen Verfahrens und die Arbeitsweise der erfindungsgemäßen Vorrichtung für verschiedene Anwendungszwecke verdeutlicht:

1. Ausführungsbeispiel:

Herstellung von Halbbitter-Qualitäts-Schokolade

Es wird als Extruder eine verschleißgeschützte zweiwellige, gleichsinnig drehende Schneckenmaschine vom Typ CONTINUA 12o/48 D/5o Upm verwendet.

Zone I:

5oo kg/h roher Kakaokernbruch mit 3% Ausgangsfeuchte wird in den ersten Gehäuseschuß dosiert. Am Ende des ersten Gehäuseschusses ist eine Dampfsperre derart vorgesehen, daß das Produkt über ein Rückförderelement lokal kompaktiert wird. In den zweiten Gehäuseschuß wird Hochdruckdampf mit einem Druck von ca. 1o bar mit 2oo°C in einer Menge von 5o kg/h (1o%) dosiert. Der kondensierte Dampf heizt das Produkt von 2o°C auf 1oo°C auf. Im zweiten und dritten Gehäuseschuß sind Rückförderelemente eingebaut, um das Produkt zu scheren. Hierdurch und durch die überlagerte Gehäuseheizung von 25o°C wird die Produkttemperatur auf 17o°C erhöht. Dies reduziert die Bakterienzahl in 4o Sekunden auf 1/1ooo. Am Ende des dritten Gehäuseschusses werden 55 kg/h Dampf mit allen Off-Flavours bei 2oo mbar Druck geflasht. Gewünschte Aromen können hier nicht entweichen, da sie erst stromabwärts gebildet werden. Die Feuchte sinkt auf 2%, die Temperatur auf 1oo°C.

Zone II:

Der vierte Gehäuseschuß dient als Pumpe zum Beschicken der Hammermühle. Eine Rückförderzone, welche zwei Schnecken-Durchmesser lang ist, baut am Gehäuseende den notwendigen Beschickungsdruck von 5 bar auf. Die Hammermühle arbeitet unter Atmosphärendruck. Die gemahlene, dünnflüssige rohe Kakaomasse wird von der Hammermühle stetig in den Gehäuseschuß 5 gepumpt. Die Temperatur bleibt bei 1oo°C, die Feinheit sinkt von 2 mm auf o,07 mm.

Zone III:

Die Kakaomasse wird im fünften bis siebenten Gehäuseschuß geröstet. Da die Gänge nur zu 3o% gefüllt sind, können die entstehenden Röstgase längs des offenen Extruderkanals abgezogen werden. Die stetige Abstreifung und Umschichtung im gleichsinnig drehenden Extruder erzeugt die notwendigen homogenen dünnen Schichten ohne die Gefahr von Anbackungen. Es ist in diesem Bereich eine reine Förderschnecke mit kleiner Steigung vorgesehen. Die Gehäuseschüsse sind auf 25o°C aufgeheizt, die Produkttemperatur erreicht 15o°C, das Vakuum wird über ein Ventil auf 9oo mbar gedrosselt. Die Feuchte sinkt hier auf o,5 %. Die Verweilzeit beträgt lediglich 5o Sekunden.

Zone IV:

In den Gehäuseschuß 8 werden 5oo kg/h kalter Kristallzucker zudosiert. Dadurch ergibt sich momentan eine Mischtemperatur von 8o°C, die durch Kühlung der Gehäusewand auf 4o°C sinkt. Die Gehäuseschüsse 7 und 8 sind im Flanschbereich thermisch isoliert. Die Mischung erfolgt durch Knetblöcke. In dem Gehäuseschuß 8 wird ein Teil der Kakaobutter zugepumpt (1o kg/h), um für den Refiner die notwendige Konsistenz zu schaffen. Die krümelige pastöse Masse wird in dem Gehäuseschuß 9 durch Rückfördergewinde durch eine unten liegende Öffnung auf ein Band zum Refiner, d.h. zu der Walzenanordnung, gepumpt. Dort sinkt die Feinheit auf o,018 mm, und das pulverige Walzgut wird bei 4o°C über ein zweites Band in den Gehäuseschuß 1o wieder zudosiert.

Zone V:

Im elften Gehäuseschuß wird die Mischung durch Rückförderelemente gezielt geschert, um die Kakaopartikel in Kakaobutter zu dispergieren. Hierzu sind o,o3 KWh/kg nötig. Wird weniger Energie eingeleitet, ist die Dispersion zu schlecht und das Fließverhalten ungenügend. Bei Einleitung von mehr Energie werden Sekundär-Agglomerate erzeugt, die Fett binden, was das Fließverhalten ebenfalls verschlechtert. Nur im mittleren Energiebereich erhält man auch in der sehr kurzen Scherzone die richtige Endviskosität von 1,2 Pas bei einer Fließgrenze von 15 Pa. Die Energieeinleitung wird durch die Aufteilung der Kakaobutter in dem Gehäuseschuß 8 und 11 bestimmt. Mehr Butter in dem Gehäuseschuß 8 vor der Scherzone (zugeführt durch die Leitung 4o) verringert die Energieeinleitung. In diesem Beispiel werden 7o kg/h in den Gehäuseschuß 11 dosiert, zusätzlich 5 kg/h (o,5 %) Lecithin als Emulgator. Die Temperatur steigt auf 6o°C. Die Gehäuseschüsse 1o bis 12 sind auf 4o°C temperiert.

Zone VI:

Lecithin und Restbutter werden über Knetblöcke eingemischt. Es erfolgt keine Temperaturänderung.

Zone VII:

Förderelemente bauen den erforderlichen Extrusionsdruck von 2 bar auf.

Die Gesamtverweildauer der Masse in der Vorrichtung beträgt ca. 5 Minuten.

Zone VIII:

On-line wird über eine Druckdifferenz die Viskosität gemessen. Diese Regelgröße stellt die Kakaobutterverteilung in der Einrichtung 39 ein.

2. Ausführungsbeispiel:

Herstellung von Milchqualitätsschokolade

Die Herstellung erfolgt mit einer Quantität von 1 t/h. Die Vorgehensweise entspricht der gemäß dem 1. Ausführungsbeispiel, wobei lediglich abweichend hiervon in Zone I 3oo kg/h Kernbruch und in Zone IV 2oo kg/h Vollmilchpulver und 5oo kg/h Kristallzucker zudosiert werden.

Nach der Walzenanordnung (Refiner) fließt das Pulver durch ein Fließbett, zunächst 3 Minuten bei 1oo°C unter Warmluftbeaufschlagung und Erwärmung auf 6o°C, dann 1 Minute bei 2o°C Raumluft und Kühlung auf 4o°C. Dabei entweicht 1 % Feuchte, welche durch das Milchpulver bedingt ist, und es laufen Grenzflächenreaktionen zwischen dem im Refiner geschaffenen Zucker-und Milchoberflächen ab.

3. Ausführungsbeispiel:

Herstellung von Konsumschokolade bzw. Überzugsschokolade

Ausgehend von einer minderen Bohnenqualität (viele Off-Flavours, viele Keime) wird im Gegensatz zu dem 1. Ausführungsbeispiel in der Gehäusezone I mit höherem Wassergehalt (2o % Zusatz) gefahren. Dies erfordert eine Vakuumpumpe mit 2oo mbar, um die Feuchte auf 2 % zu senken.

Die Temperatur beim Mahlen sinkt dabei auf 8o°C und muß über einen Rohrbündel-Wärmetauscher 31 wieder auf 12o°C gebracht werden. In der Gehäusezone IV wird Puderzucker zudosiert, das Mischprodukt verbleibt im Extruder. Die Endqualität ist sensorisch gröber, aber als Konsumqualität oder Überzugsschokolade ausreichend.

4. Ausführungsbeispiel:

Herstellung von Crumb-Schokolade

Bei einer Trennung der Vorrichtung nach Gehäuseschuß 7 kann die Zone IV von 2 auf 9 Gehäuse verlängert werden, d.h. der zweite Extruder wird 12 Gehäuseschüsse lang. Dies erlaubt die Durchführung langsamer thermischer Maillard-Reaktionen zwischen Aminosäuren und reduzierenden Zucker, als nach dem Zusammenmischen der Misch-und Zuckerkomponenten. Die Reaktionen erfolgen in Scherzonen und bei äußerer Gehäuseheizung auf ca. 15o°C. Der entstehende Geschmack wird als Crumb bezeichnet.

Unter Maillard-Reaktionen bzw. Maillard-Effekt wird ein Bündel chemischer Reaktionen zur Bildung eines sortentypischen Aromas verstanden.

**Patentansprüche**

1. Verfahren zur Herstellung einer Schokolademasse umfassend das Mischen, Entgasen und Verflüssigen des Ausgangsprodukts in einem zweiwelligen Schnecken-Extruder, dadurch gekennzeichnet, daß der rohe Kakaobohnenbruch einer ersten Gehäusezone eines Extruders zugeführt und nach Passieren einer Dampfsperre mit Hochdruck-Dampf beaufschlagt wird, daß die erste Zone im Anschluß daran mit einer Vakuumpumpe verbunden wird, wobei die Masse in der ersten Zone auf diese Weise einem Misch-, Knet- und Entgasungsvorgang unterzogen wird, daß die Masse aus einer sich an diese erste Zone anschließenden zweiten Gehäusezone direkt einer Zerkleinerungsvorrichtung (Hammermühle) zugeführt wird, und daß die Masse nach Bearbeitung in der Zerkleinerungsvorrichtung (Hammermühle) unmittelbar einer dritten, sich an die zweite Gehäusezone des gleichen Extruders anschließende Gehäusezone zugeführt wird, welche ebenfalls mit einer Vakuumpumpe verbunden ist.

2. Verfahren nach Anspruch 1, dadurch gekennzeichnet, daß der Durchsatz in der dritten Gehäusezone des gleichen Extruders so eingestellt wird, daß lediglich eine Teilfüllung entsteht, wobei durch eine Heizung der Gehäusewandung in dieser dritten Zone eine Röstung in dünnen Schichten bewirkt und die Röstgase rückwärts entgegen der Förderrichtung des Produkts abgezogen werden.

3. Verfahren nach Anspruch 2, dadurch gekennzeichnet, daß für die ersten drei Gehäusezonen (I, II, III) und gegebenenfalls die Zerkleinerungsvorrichtung (Hammermühle) eine einzige Vakuumpumpe verwendet wird.

4. Verfahren nach Anspruch 2, dadurch gekennzeichnet, daß die Masse nach der der Röstung dienenden dritten Gehäusezone einer vierten Gehäusezone desselben Extruders, in welcher die Masse gekühlt und mit Rezepturbestandteilen gemischt wird, zugeführt wird.

5. Verfahren nach Anspruch 1, bei welchem der aufbereiteten Masse Kristallzucker zugeführt wird, dadurch gekennzeichnet, daß man die Mischung nach dem Kühlvorgang einer Walze und gegebenenfalls einem Stoffaustausch-Fluidatbett zuführt, und das dort entstehende lose Pulver wieder in eine sich anschließende fünfte Gehäusezone des Extruders einführt.

6. Verfahren nach Anspruch 4, dadurch gekennzeichnet, daß die Mischung nach dem Kühlen einer der Einleitung von Scherkräften dienenden fünften Gehäusezone zugeführt wird.

7. Verfahren nach Anspruch 1, dadurch gekennzeichnet, daß in einer sich an die Scherzone anschließenden sechsten Gehäusezone Zusätze wie Lecithin und Restkakaobutter eingemischt werden.

8. Vorrichtung zur Durchführung des Verfahrens nach Anspruch 1, umfassend einen zweiwelligen Schnecken-Extruder, dadurch gekennzeichnet, daß in einer ersten Gehäusezone (I) einer Produkteintragsleitung (14) eine Dampfsperr-Einrichtung (16) und eine Hochdruckdampf-Zuführleitung (17) nachgeordnet sind.

9. Vorrichtung nach Anspruch 8, dadurch gekennzeichnet, daß sich an die erste Gehäusezone (I) des Extruders (13) eine zweite, als Pumpzone ausgebildete Gehäusezone (II) anschließt, wobei von dieser Gehäusezone (II) eine Zweigleitung (21) über eine Zerkleinerungsvorrichtung (Hammermühle 22) und von dieser zurück in eine vierte Gehäusezone (IV) des gleichen Extruders (13) führt.

10. Vorrichtung nach Anspruch 8, dadurch gekennzeichnet, daß die dritte Gehäusezone (III) einen Heizmantel (24) umfaßt.

11. Vorrichtung nach Anspruch 9, dadurch gekennzeichnet, daß sich an die dritte Gehäusezone (III) eine vierte Gehäusezone (IV) mit einem Kühlmantel (38) als Mischzone anschließt.

12. Vorrichtung nach Anspruch 11, dadurch gekennzeichnet, daß sich an die vierte Gehäusezone (IV) eine Temperier- und Scherzone (V), eine Mischzone (VI) und eine Pumpzone (VII) anschließen.

13. Vorrichtung nach Anspruch 8, dadurch gekennzeichnet, daß in die Kühl- und Mischzone (Gehäusezone IV) und in die Scherzone (Gehäusezone V) je eine Kakaobutter-Zuführleitung (4o bzw. 41) mündet, welcher eine Verteil-und Dosiereinrichtung (39) vorgeordnet ist.

14. Vorrichtung nach Anspruch 13, dadurch gekennzeichnet, daß die Verteil- und Dosiereinrichtung (39) mit einer am Austragsende (43) angeordneten Viskositäts-Meßeinrichtung (44) verbunden ist.

## Claims

1. A method of preparing a chocolate mixture comprising the mixing, freeing from gas and liquefaction of the starting product in a twin-shaft screw extruder, characterized in that the raw cocoa-bean fragments are supplied to a first housing zone of an extruder and, after passing through a steam lock, are acted upon by high-pressure steam, that following thereon, the first zone is connected to a vacuum pump, the mixture being subjected to a mixing, kneading and degassing operation in the first zone, that the mixture is supplied directly, from a second housing zone following on this first zone, to a comminuting device (hammer mill) and that, after being processed in the comminuting device (hammer mill), the mixture is supplied directly to a third housing zone which follows on the second housing zone of the same extruder and which is likewise connected to a vacuum pump.

2. A method as claimed in claim 1, characterized in that the throughput in the third housing zone of the same extruder is adjusted so that only a partial filling occurs, a roasting in thin layers being caused by a heating of the housing wall in this third zone and the gases from the roasting being drawn off backwards in a direction opposite the conveying direction of the product.

3. A method as claimed in claim 2, characterized in that a single vacuum pump is used for the first three housing zones (I, II, III) and possibly for the comminuting device (hammer mill).

4. A method as claimed in claim 2, characterized in that, after the third housing zone serving for the roasting, the mixture is supplied to a fourth housing zone of the same extruder, in which the mixture is cooled and mixed with recipe ingredients.

5. A method as claimed in claim 1 wherein refined sugar in crystals is added to the prepared mixture, characterized in that, after the cooling operation, the mixture is supplied to a roller and possibly to a fluidized bed for the exchange of material and the loose powder formed there is again introduced into a following fifth housing zone of the extruder.

6. A method as claimed in claim 4, chracterized in that, after being cooled, the mixture is supplied to a fifth housing zone serving to introduce shearing forces.

7. A method as claimed in claim 1, characterized in that additives such as lecithin and residual cocoa-butter are mixed in, in a sixth housing zone following on the shearing zone.

8. An apparatus for carrying out the method as claimed in claim 1, comprising a twin-shaft screw extruder, characterized in that, in a first housing zone (I), a steam-lock device (16) and a high-pressure steam supply pipe (17) follow a product feed pipe (14).

9. An apparatus as claimed in claim 8, characterized in that a second housing zone (II) constructed in the form of a pump zone, follows on the first housing zone (I) of the extruder (13), a branch pipe (21) leading from this housing zone (II) through a comminuting device (hammer mill 22) and from this back into a fourth housing zone (IV) of the same extruder (13).

10. An apparatus as claimed in claim 8, characterized in that the third housing zone (III) comprises a heating jacket (24).

11. An apparatus as claimed in claim 9, characterized in that following on the third housing zone (III) is a fourth housing zone (IV) with a cooling jacket (38) as a mixing zone.

12. An apparatus as claimed in claim 11, characterized in that a tempering and shearing zone (V), a mixing zone (VI) and a pump zone (VII) follow on the fourth housing zone (IV).

13. An apparatus as claimed in claim 8, characterized in that cocoa-butter supply pipes (40 and 41), which are preceded by a distributing and proportioning device (39), lead one into the cooling and mixing zone (housing zone IV) and the other into the shearing zone (housing zone V).

14. An apparatus as claimed in claim 13, characterized in that the distributing and proportioning device (39) is connected to a viscosity measuring device (44) arranged at the discharge end (43).

**Revendications**

1. Procédé de fabrication d'une masse de chocolat, comprenant le mélange, le dégazage et la liquéfaction du produit de départ dans une extrudeuse à vis sans fin à arbre double, caractérisé en ce que les fèves fragmentées brutes sont amenées à une première zone de carter et, après passage d'une barrière à vapeur, sont sollicitées par de la vapeur sous haute pression, en ce qu'à la suite de cela, la première zone est raccordée à une pompe à vide, la masse étant ainsi soumise dans cette première zone, à une opération de mélange, de pétrissage et de dégazage, en ce que la masse est amenée directement à partir d'une deuxième zone de carter se raccordant à la première zone, à un dispositif de broyage (moulin à marteaux), et en ce que la masse, après son traitement dans le dispositif de broyage (moulin à marteaux), est amenée directement à une troisième zone de carter qui est raccordée à la deuxième zone de carter de la même extrudeuse et qui est également reliée à une pompe à vide.

2. Procédé selon la revendication 1, caractérisé en ce que le débit dans la troisième zone de carter de la même extrudeuse, est réglé de telle sorte qu'il ne se produise qu'un remplissage partiel, un chauffage des parois du carter dans cette troisième zone conduisant à une torréfaction par couches minces et les gaz de torréfaction étant soustraits vers l'arrière, à l'encontre du sens de transport du produit.

3. Procédé selon la revendication 2, caractérisé en ce que l'on utilise une seule pompe à vide pour les trois premières zones de carter (I, II, III) et le cas échéant, pour le dispositif de broyage (moulin à marteaux).

4. Procédé selon la revendication 2, caractérisé en ce que la masse, après la troisième zone de carter servant à la torréfaction, est amenée à une quatrième zone de carter de la même extrudeuse, dans laquelle la masse est refroidie et mélangée à des ingrédients spécifiques à la recette.

5. Procédé selon la revendication 1, du sucre cristallisé étant additionné à la masse, caractérisé en ce que l'on transfère le mélange après l'opération de refroidissement, à un ensemble à cylindres et éventuellement à un lit fluidisé d'échange de substances, et en ce que l'on réintroduit la poudre en vrac ainsi formée, dans une cinquième zone de carter attenante de l'extrudeuse.

6. Procédé selon la revendication 4, caractérisé en ce que la masse, après son refroidissement, est amenée à une cinquième zone de carter destinée à lui communiquer des efforts de cisaillement.

7. Procédé selon la revendication 1, caractérisé en ce que l'on effectue l'amenée et le mélange d'éléments additionnels tels que de la lécithine et du beurre de cacao résiduel, dans une sixième zone de carter se raccordant à la zone de brassage de cisaillement.

8. Installation pour la mise en oeuvre du procédé selon la revendication 1, comportant une extrudeuse à vis sans fin à arbre double, caractérisée en ce que dans une première zone de carter (I), un dispositif formant barrière à vapeur (16) et une conduite d'alimentation en vapeur sous haute-pression (17) succèdent à une conduite d'alimentation en produit (14).

9. Installation selon la revendication 8, caractérisée en ce qu'à la première zone de carter (I) de l'extrudeuse (13), se raccorde une deuxième zone de carter (II) réalisée sous la forme d'une zone de pompage, une conduite en dérivation (21) qui part de cette zone de carter (II) et passe par un dispositif de broyage (moulin à marteaux 22), retournant à partir de là dans une troisième zone de carter (III) de la même extrudeuse (13).

10. Installation selon la revendication 8, caractérisée en ce que la troisième zone de carter (III) comprend une enveloppe de chauffage (24).

11. Installation selon la revendication 9, caractérisée en ce qu'à la troisième zone de carter (III) se raccorde une quatrième zone de carter (IV) faisant office de zone de mélange et comprenant une enveloppe de refroidissement (38).

12. Installation selon la revendication 11, caractérisée en ce qu'à la quatrième zone de carter (IV) se raccordent une zone de tempérage et de brassage de cisaillement (V), une zone de mélange (VI) et une zone de pompage (VII).

13. Installation selon la revendication 8, caractérisée en ce que dans la zone de refroidissement et de mélange (zone de carter IV) et dans la zone de brassage de cisaillement (zone de carter V), débouche une conduite d'alimentation en beurre de cacao (40 respectivement 41), un dispositif de répartition et de dosage (39) précédant ces conduites.

14. Installation selon la revendication 13, caractérisée en ce que le dispositif de répartition et de dosage (39) est relié à un dispositif de mesure de la viscosité (44) situé à l'extrémité de sortie (43).

EP 0 262 300 B1